# FASCICULE DE BREVET EUROPEEN

(11) **EP 3 112 773 B1**
(45) Date de publication et mention de la délivrance du brevet: **30.10.2019**
(21) Numéro de dépôt: 16176001.2
(22) Date de dépôt: 23.06.2016
(51) Int. Cl.: F24S 20/66, F24S 80/52, E04B 1/76, C04B 28/02, E04F 13/02

(54) **PROCÉDÉ DE POSE D'UN PAREMENT EXTÉRIEUR SUR UNE FAÇADE D'UN BÂTIMENT ET BÂTIMENT CORRESPONDANT**
VERFAHREN ZUR ANBRINGUNG EINER AUSSENVERKLEIDUNG AUF EINER GEBÄUDEFASSADE, UND ENTSPRECHENDES GEBÄUDE
METHOD FOR APPLYING AN EXTERIOR CLADDING TO A FACADE OF A BUILDING AND CORRESPONDING BUILDING

(30) Priorité: 23.06.2015 FR 1555759
(43) Date de publication de la demande: 04.01.2017
(73) Titulaire: COMMISSARIAT À L'ÉNERGIE ATOMIQUE ET AUX ÉNERGIES ALTERNATIVES, 75015 Paris (FR); Association Pour La Recherche Et Le Développement De Méthodes Et Processus Industriels "Armines", 75272 Paris Cedex 06 (FR)
(72) Inventeur: ACHARD, Patrick, 06130 Le Plan de Grasse (FR); IBRAHIM, Mohamad, 06600 ANTIBES (FR); WURTZ, Etienne, 73000 CHAMBERY (FR)
(74) Mandataire: Novaimo

(56) Documents cités:
- EP-A1- 0 333 145
- EP-A1- 0 473 859
- EP-A2- 2 522 927
- WO-A1-2011/083174
- WO-A1-2015/044111
- DE-A1- 10 211 331
- DE-A1- 19 726 330
- DE-A1- 19 936 629
- DE-U1- 20 100 579
- JP-A- 2006 308 271
- US-A- 5 092 101
- MARK DOWSON ET AL: "Predicted and in situ performance of a solar air collector incorporating a translucent granular aerogel cover", ENERGY AND BUILDINGS, LAUSANNE, CH, vol. 49, 3 février 2012 (2012-02-03), pages 173-187, XP028514215, ISSN: 0378-7788, DOI: 10.1016/J.ENBUILD.2012.02.007 [extrait le 2012-02-18]
- REIM M ET AL: "Silica aerogel granulate material for thermal insulation and daylighting", SOLAR ENERGY, PERGAMON PRESS. OXFORD, GB, vol. 79, no. 2, 1 août 2005 (2005-08-01), pages 131-139, XP027840574, ISSN: 0038-092X [extrait le 2005-08-01]

## Description

L'invention concerne un procédé de réalisation d'un parement extérieur d'une façade de bâtiment et un bâtiment correspondant.

Dans le domaine de la rénovation et de l'assainissement énergétique de bâtiments anciens, une solution consiste à mettre en œuvre une isolation par l'extérieur. Différentes solutions techniques peuvent être mises en œuvre à cette fin telles que la pose de panneaux isolants revêtus d'un enduit mince ou d'une couche de finition. Le document DE 201 00 579 U décrit par exemple un procédé de pose d'un parement extérieur sur une façade d'un bâtiment, comportant une étape de pose d'un système d'isolation thermique par l'extérieur sur la façade. Une nouvelle solution fait appel à un enduit isolant à base d'aérogel de silice. Cet enduit contient une matrice hydraulique incorporant des granules isolants d'aérogel de silice. Il présente une conductivité thermique de l'ordre de 0,026 W/mK, contre 0,032 W/mK pour la laine de verre par exemple. L'enduit isolant à base d'aérogel de silice granulaire est projeté par une machine à projeter classique. La pose se déroule en trois étapes successives :
- réalisation d'une couche d'enduit isolant, par projection à l'aide d'une machine à projeter classique ;
- ajout d'une couche de base tramée de renforcement mécanique ;
- application d'une finition en surface, par exemple à l'aide d'un enduit de finition à la chaux.

L'aérogel de silice granulaire, incorporé dans le produit, confère des qualités d'isolation et de légèreté à la couche d'enduit isolant. La réalisation de parements extérieurs sur les façades d'un bâtiment, par projection d'un enduit isolant à base d'aérogel de silice en continu sur l'enveloppe du bâtiment, supprime tout risque de pont thermique. Cette solution est simple à mettre en œuvre et ne nécessite pas d'équipements particuliers. Elle évite la pose de panneaux de laine minérale ou de polystyrène expansé et les problèmes liés (découpe, gestion des points singuliers etc.).

La présente invention propose de rendre les systèmes d'isolation thermique par l'extérieur davantage polyvalents.

A cet effet, l'invention concerne un procédé de pose d'un parement extérieur sur une façade d'un bâtiment, comportant une étape de pose d'un système d'isolation thermique par l'extérieur sur la façade, caractérisé en ce qu'il comprend les étapes suivantes :
- réaliser une cavité dans le système d'isolation thermique par l'extérieur,
- installer dans ladite cavité un échangeur thermique absorbeur solaire à fluide caloporteur et isoler thermiquement l'échangeur thermique absorbeur solaire de l'extérieur avec un matériau aérogel isolant thermique et translucide de sorte à laisser passer au moins 30% des rayons solaires incidents du spectre visible jusqu'à l'échangeur thermique absorbeur solaire.

L'échangeur thermique absorbeur solaire installé dans la cavité créée au sein du système d'isolation thermique par l'extérieur (ITE) et le matériau aérogel isolant recouvrant cet échangeur thermique absorbeur solaire forment en définitive un capteur thermique solaire qui est intégré dans le système thermo-isolant extérieur. Le matériau isolant aérogel translucide permet d'assurer la continuité de l'isolation thermique au niveau de la cavité, voire même de l'améliorer. On évite ainsi de créer un pont thermique susceptible de fortement dégrader l'isolation thermique de la façade. L'intégration du capteur thermique solaire dans le système ou revêtement d'isolation thermique par l'extérieur est particulièrement intéressante sur le plan énergétique dans le cadre de la rénovation d'un bâtiment ancien. En effet, le parement extérieur de l'invention permet non seulement d'améliorer l'isolation thermique du bâtiment mais également de le doter d'une fonction de captation de l'énergie solaire notamment à des fins de chauffage du bâtiment ou d'eau chaude sanitaire.

Le système d'ITE peut comprendre l'un des éléments isolants du groupe comportant un enduit d'isolation thermique par l'extérieur, notamment un enduit à aérogel granulaire, et des panneaux, rigides ou souples, d'isolation thermique par l'extérieur.

Dans un mode de réalisation particulier, l'étape de pose d'un système d'isolation thermique par l'extérieur sur la façade est réalisée par projection d'un enduit d'isolation thermique par l'extérieur, notamment un enduit à aérogel granulaire.

Avantageusement, ledit matériau aérogel isolant thermique introduit dans la cavité est un aérogel granulaire ou monolithique, notamment un aérogel de silice. L'aérogel granulaire ou monolithique, translucide, notamment l'aérogel de silice, présente d'excellentes propriétés d'isolation thermique et assure ainsi la continuité de l'isolation thermique, sans pont thermique, du parement extérieur malgré la cavité qui réduit localement l'isolation thermique conférée par l'enduit isolant à aérogel.

Le procédé comprend avantageusement tout ou partie des caractéristiques additionnelles suivantes :
- on pose sur la façade, par projection, une première couche d'enduit d'isolation thermique ayant une première épaisseur puis une deuxième couche d'enduit d'isolation thermique ayant une deuxième épaisseur en ménageant dans ladite deuxième couche une ouverture à l'aide d'une empreinte de forme complémentaire à celle de la cavité ;
- l'enduit d'isolation thermique par l'extérieur contient une matrice, notamment un mortier, et des granules d'aérogel, notamment de l'aérogel de silice ;
- l'enduit à aérogel a une conductivité thermique inférieure à 0,030 W/m.K ;
- il comprend une sous-étape de raccordement de l'absorbeur échangeur thermique solaire à un circuit d'eau pour le chauffage du bâtiment et/ou de l'eau chaude sanitaire ;
- il comprend les étapes de : introduire l'échangeur thermique absorbeur solaire dans la cavité, fermer ladite cavité à l'aide d'une plaque en matériau transparent dans le spectre du visible et remplir ladite cavité avec le matériau isolant aérogel granulaire ;
- il comprend une étape d'insertion d'un module préfabriqué comportant l'absorbeur échangeur thermique solaire et une boîte fermée contenant le matériau aérogel isolant granulaire ou monolithique introduit dans la cavité.

L'invention concerne aussi un bâtiment comportant au moins une façade ayant un parement extérieur comportant un système d'isolation thermique par l'extérieur, caractérisé en ce que le système d'isolation thermique par l'extérieur intègre une cavité contenant un échangeur thermique absorbeur solaire à fluide caloporteur et un matériau aérogel isolant thermique et translucide adapté pour isoler thermiquement de l'extérieur l'échangeur thermique absorbeur solaire et pour laisser passer au moins 30% des rayons solaires incidents du spectre visible jusqu'à l'échangeur thermique absorbeur solaire.

Le bâtiment comprend avantageusement tout ou partie des caractéristiques additionnelles suivantes :
- ledit matériau aérogel isolant thermique est un aérogel granulaire ou monolithique, notamment un aérogel de silice ;
- le système d'isolation thermique par l'extérieur comprend l'un des éléments isolants du groupe comportant un enduit d'isolation thermique par l'extérieur, notamment un enduit à aérogel granulaire, et des panneaux, rigides ou souples, d'isolation thermique par l'extérieur ;
- le fond de la cavité est séparé de la façade par une épaisseur d'élément isolant ;
- l'enduit du système d'isolation thermique par l'extérieur contient une matrice, notamment un mortier, et de l'aérogel granulaire, notamment de l'aérogel de silice ;
- l'enduit à aérogel granulaire a une conductivité thermique inférieure à 0,030 W/m.K ;
- l'échangeur thermique absorbeur solaire est raccordé à un circuit d'eau pour le chauffage du bâtiment et/ou de l'eau chaude sanitaire ;
- la cavité est remplie avec le matériau aérogel isolant sous forme granulaire et fermée par une plaque en matériau transparent dans le spectre du visible ;
- la cavité contient un module préfabriqué comportant l'absorbeur échangeur thermique solaire et une boîte fermée contenant le matériau aérogel isolant granulaire ou monolithique introduit dans la cavité.

L'invention sera mieux comprise à l'aide de la description suivante d'un mode de réalisation particulier du procédé de pose d'un parement extérieur d'une façade de bâtiment et un bâtiment, selon une forme de réalisation particulière de l'invention, en référence aux dessins annexés sur lesquels :
- la figure 1 représente une vue en coupe d'une façade d'un bâtiment dotée d'un parement selon une forme de réalisation particulière de l'invention ;
- la figure 2 représente un organigramme des étapes du procédé de pose du parement de la figure 1, selon un mode de réalisation particulier de l'invention.

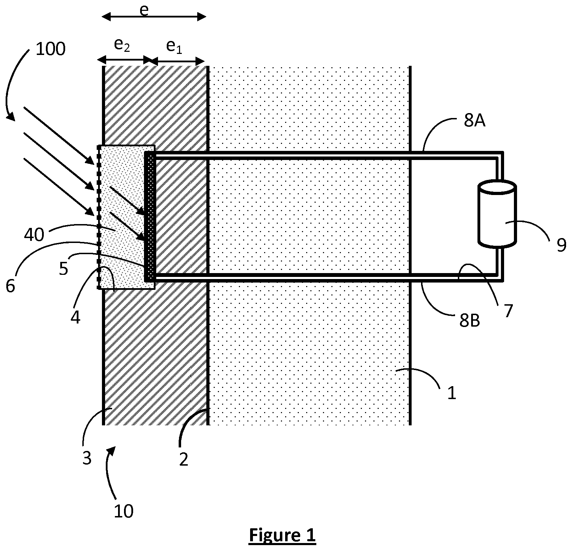

Sur la figure 1, on a représenté un mur d'enceinte 1 d'un bâtiment, par exemple une maison, dont l'une des faces est extérieure et constitue une façade 2. Par le terme « façade », on entend ici désigner une face extérieure d'un mur de bâtiment.

Par définition, dans la description qui suit, le terme « avant » fait référence à une direction, ou une position, relative à l'extérieur du bâtiment et le terme « arrière » fait référence à une direction, ou une position, relative à l'intérieur du bâtiment.

La façade 2 est recouverte d'un parement extérieur 10 comportant un système 3 d'isolation thermique par l'extérieur ou système d'ITE. Le revêtement 3 est ici une couche d'un enduit d'isolation thermique ou thermo-isolant. L'enduit isolant 3 comporte une matrice incorporant ici un aérogel de silice. La matrice est ici un mortier contenant par exemple un mélange de ciment et de charge minérale fine. L'aérogel de silice est incorporé dans la matrice sous forme de granules. Le volume d'aérogel est du même ordre de grandeur que le volume de mortier. Il confère à l'enduit constituant la couche 3 des propriétés thermo-isolantes (c'est-à-dire d'isolation thermique). Cet enduit présente une conductivité thermique de l'ordre de 0.026 W/m.K.

Dans l'exemple de réalisation décrit ici, la couche thermo-isolante 3 présente une épaisseur « e » de l'ordre de 4cm. Cette épaisseur pourrait être comprise entre environ 2 et 10 cm.

La couche thermo-isolante 3 comporte une cavité 4 ménagée dans la face extérieure de la couche 3. Cette cavité 4 a par exemple une forme parallélépipédique. Sa profondeur est ici de l'ordre de 2 cm, mais pourrait être comprise entre 1 et 5 cm. Le fond de la cavité 4 s'étend sur une surface relativement étendue. Cette surface est ici légèrement supérieure à 5 m². Elle pourrait être comprise par exemple entre 1 et 10 m².

La cavité 4 constitue un logement de réception d'un échangeur thermique absorbeur solaire 5 à fluide caloporteur7. L'échangeur absorbeur 5 est disposé au fond la cavité 4. Il peut être fixé par collage, vissage ou toute autre technique de fixation adaptée. L'échangeur absorbeur 5 s'étend dans un plan qui est ici vertical, parallèle à la façade 2.

L'échangeur absorbeur 5 est doté d'une couverture translucide apte à isoler thermiquement l'échangeur absorbeur 5 de l'extérieur, le tout formant un capteur thermique solaire. La couverture translucide d'isolation thermique sera décrite plus en détails par la suite. Le capteur thermique solaire est destiné à collecter de l'énergie solaire transmise par la lumière du soleil et à la restituer à un fluide caloporteur 7 sous forme de chaleur. En d'autres termes, il récupère de l'énergie solaire et la transforme en énergie calorifique qui sert à chauffer le fluide 7.

Dans l'exemple particulier de réalisation décrit ici, le fluide caloporteur 7 est de l'eau sanitaire et l'échangeur absorbeur 5 du capteur thermique solaire est utilisé pour produire de l'eau chaude sanitaire du bâtiment. L'échangeur absorbeur 5 est raccordé à un circuit d'eau chaude sanitaire comportant des conduits 8A, 8B et un réservoir d'eau chaude 9.

En variante, le capteur thermique solaire pourrait être utilisé pour le chauffage du bâtiment ou pour tout autre type de chauffage. Le fluide caloporteur peut être un liquide (ou un gaz), par exemple de l'eau, mélangé avec un antigel.

De façon connue, l'échangeur absorbeur 5 du capteur thermique solaire comprend ici un serpentin à travers lequel le fluide 7 circule. Le serpentin peut être peint en noir afin d'optimiser l'absorption de la lumière du soleil. En variante, le serpentin peut être plaqué contre la face arrière d'une feuille absorbante.

Sur la figure 1, la référence 9 désigne un chauffe-eau solaire, c'est-à-dire une réserve d'eau chaude, chauffée par énergie solaire. Le chauffe-eau 9 est relié aux deux extrémités du serpentin de l'échangeur absorbeur 5 du capteur thermique solaire par l'intermédiaire de deux conduits 8A, 8B. En fonctionnement, le chauffe-eau 9 est alimenté en eau sanitaire 7 froide. Un circulateur (non représenté) fait circuler cette eau 7 en boucle à travers le circuit comportant le conduit 8A, le serpentin de l'échangeur absorbeur 5 du capteur thermique solaire, le conduit 8B et le chauffe-eau, afin de chauffer l'eau 7 lors de son passage à travers l'échangeur absorbeur 5 du capteur solaire.

La cavité 4 est fermée dans le plan de la surface extérieure du parement 10 par une plaque de fermeture 6. Cette plaque 6 comporte ici une vitre en un matériau qui est ici transparent dans le visible, par exemple en verre ou en matière plastique. Par le terme « transparent dans le visible », on entend ici désigner un matériau qui laisse passer la totalité ou la quasi-totalité (au moins 90%) des rayons lumineux de la gamme de longueurs d'onde du spectre visible du rayonnement solaire. La cavité 4 constitue ainsi une boîte (ou caisson) vitrée fermée.

La cavité 4 contient également un matériau thermo-isolant de remplissage destiné à assurer la continuité de l'isolation thermique conférée par le parement extérieur 10 au niveau de la cavité 4. Le matériau thermo-isolant de remplissage est ici constitué d'un aérogel de silice granulaire ou monolithique. L'aérogel de silice remplit le volume intérieur libre de la cavité 4 avec un taux de remplissage supérieur ou égal à 90% en volume. Il forme une couche isolante 40 entre l'échangeur absorbeur 5 et la vitre de fermeture 6. Cette couche isolante 40 a pour rôle d'isoler thermiquement l'échangeur absorbeur 5 afin d'éviter les pertes de chaleur vers l'avant du capteur thermique solaire ainsi constitué. La conductivité de l'aérogel de silice est comprise entre 0,012 et 0,016 W/m.K.

La couche isolante 40 d'aérogel de silice est translucide. Par « translucide », on entend signifier qu'elle ne laisse passer qu'une partie des rayons de lumière incidents du spectre visible. Elle laisse passer un ratio au moins égal à 30% de la partie visible du rayonnement solaire incident, et avantageusement par exemple de l'ordre de 60%.

La couche 40 d'aérogel de silice permet d'empêcher que l'énergie solaire captée par l'échangeur absorbeur 5 du capteur solaire thermique ne ressorte en sens inverse par tout mode de transfert thermique. Elle permet donc d'éviter, ou tout au moins de limiter fortement, les pertes thermiques en face avant du capteur solaire thermique réalisé au sein de l'enduit isolant.

La couche isolante 40 et la vitre de fermeture 6 forment la couverture translucide d'isolation thermique recouvrant l'échangeur absorbeur 5 du capteur solaire.

L'étendue de la surface du capteur thermique solaire est adaptée aux besoins énergétiques visés. Dans l'exemple particulier de réalisation décrit ici, la surface du capteur 5 est d'environ 5 m². Bien entendu, cette surface pourrait être plus petite ou plus grande avec une plage de variation de 1 à 10 m².

Le parement extérieur 10 pourrait également comprendre une couche tramée de renforcement mécanique et/ou une couche de finition (non représentées). La couche tramée comprend par exemple une trame de verre placée contre la surface extérieure de la couche thermo-isolante 3 (c'est-à-dire à l'avant de celle-ci). La couche de finition est par exemple réalisée à l'aide d'un enduit de finition à la chaux.

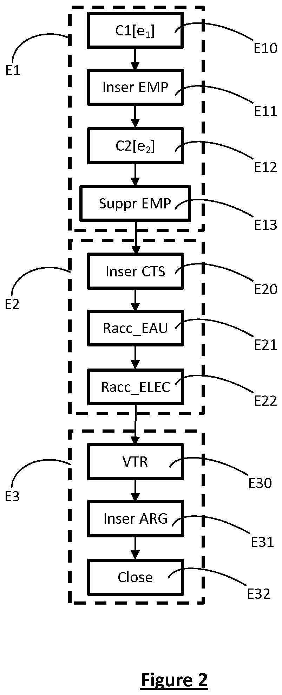

En référence à la figure 2, on va maintenant décrire un procédé de pose d'un parement extérieur d'une façade de bâtiment, selon un mode de réalisation particulier de l'invention. Dans l'exemple décrit ci-après, le procédé permet de réaliser le parement 10 tel que représenté sur la figure 1.

Le procédé comporte une première étape E1 de pose de la couche d'isolation thermique 3 par projection d'un enduit isolant à aérogel granulaire sur la façade 2 du mur 1. Comme précédemment indiqué, l'enduit est un mélange contenant un mortier et des granules d'aérogel de silice. Il est projeté par un opérateur à l'aide d'une machine à projeter classique ici directement sur la surface extérieure 2 du mur 1. La couche thermo-isolante 3 réalisée ménage une cavité 4. Cette cavité 4 peut être obtenue par la mise en œuvre des sous-étapes suivantes :
- pose E10 d'une première couche C1 par projection de l'enduit isolant à aérogel de silice sur une première épaisseur e₁, ici de l'ordre de 2cm ;
- placement ou ajout E11 d'une empreinte de forme complémentaire à celle de la cavité 4 contre la première couche d'épaisseur e₁ et fixation de cette empreinte par des moyens de fixation provisoire (par exemple par léger collage) ;
- pose E12 d'une deuxième couche C2 par projection de l'enduit isolant à aérogel de silice sur une deuxième épaisseur e₂, ici de l'ordre de 2cm ;
- retrait E13 de l'empreinte hors de la cavité 4 ainsi formée.

On pourrait toutefois envisager un processus différent pour la réalisation de la cavité 4 dans la couche thermo-isolante 3.

Le procédé se poursuit par une étape E2 d'installation de l'échangeur thermique absorbeur solaire 5. L'échangeur absorbeur 5 est introduit dans la cavité 4 et placé contre la paroi de fond de celle-ci, lors d'une sous-étape E20. Les deux extrémités du serpentin sont ensuite raccordées aux conduits 8A et 8B lors d'une sous-étape E21. Pour effectuer ce raccordement, on perce des ouvertures à travers la première couche C1 d'enduit isolant à aérogel et à travers le mur 1 afin d'y faire passer les parties d'extrémité de raccordement des conduits 8A et 8B.

Après la pose de l'échangeur thermique absorbeur solaire 5, on ferme la cavité 4 en la remplissant de granules d'aérogel de silice afin de former la couche isolante 40, lors d'une étape E3. A cet effet, on met par exemple en œuvre les sous-étapes suivantes :
- pose et fixation de la vitre 6 afin de fermer la cavité 4, lors d'une sous-étape E30 ;
- remplissage de la cavité 4 à l'aide de granules d'aérogel de silice introduits à l'intérieur de la cavité 4 par une ouverture spécifique ménagée par exemple dans la partie haute de la vitre 6, lors d'une sous-étape E31,
- fermeture de l'ouverture ménagée dans la vitre 6, lors d'une sous-étape E32.

L'échangeur thermique absorbeur solaire 5 est ainsi mis en place dans ladite cavité 4 tout en étant isolé thermiquement de l'extérieur par un aérogel de silice 40.

En fonctionnement, une partie des rayons solaires incidents sur la vitre 6 pénètre dans la cavité 4, traversent la couche isolante d'aérogel de silice 40 et est collectée par l'échangeur thermique absorbeur solaire 5. Dans l'exemple particulier de réalisation décrit ici, environ 60% des rayons solaires incidents du spectre visible traversent la vitre 6 et la couche isolante 40 et sont reçus par l'échangeur thermique absorbeur solaire 5. Cet échangeur thermique absorbeur solaire 5 récupère l'énergie solaire et la transforme en énergie calorifique qui est transmise au fluide, en l'espèce l'eau sanitaire 7, mis en circulation dans le circuit reliant le serpentin de l'échangeur thermique absorbeur solaire 5 au chauffe-eau 9. L'eau sanitaire du chauffe-eau solaire 9 est ainsi chauffée par énergie solaire.

Dans la description qui précède, les granules d'aérogel incorporées dans l'enduit isolant 3 et remplissant la cavité 4 sont en aérogel de silice. En variante, on pourrait utiliser un aérogel d'un autre produit ou composé chimique apte à conférer des propriétés d'isolation thermique et de translucidité.

En variante, on peut utiliser un module capteur solaire thermique préfabriqué comportant l'échangeur thermique absorbeur solaire et une boîte fermée contenant le matériau isolant à aérogel (par exemple l'aérogel de silice granulaire ou monolithe) et comportant une face supérieure (ou avant) et une face inférieure (ou arrière) en matériau transparent dans le spectre du visible (par exemple en verre ou en plastique). L'échangeur thermique absorbeur solaire peut être plaqué contre la face arrière de la boîte. Le module capteur solaire thermique et la cavité 4 ont globalement des formes complémentaires. Le module est ainsi conformé pour être inséré dans la cavité 4 lors de son installation.

Dans la réalisation qui précède, le système d'isolation thermique par l'extérieur 3 est réalisé avec un enduit à aérogel isolant thermiquement qui est déposé sous forme d'une couche sur la façade à isoler par projection. L'invention pourrait également s'appliquer à tout système d'ITE (Isolation Thermique par l'Extérieur), par exemple à base de panneaux isolants thermiques ou de tout type d'enduit isolant thermique. Les panneaux peuvent être rigides ou souples. Ils sont réalisés en un matériau isolant tel que du polyuréthane, du polystyrène, expansé ou extrudé, de la laine de verre, ou encore de la laine de roche. Ainsi, d'une manière plus générale, l'invention concerne un procédé de pose d'un parement extérieur sur une façade d'un bâtiment, comportant une étape de pose d'un système d'isolation thermique par l'extérieur (ITE) sur la façade, une étape de réalisation d'une cavité dans le revêtement ou système d'ITE, une étape d'installation dans ladite cavité d'un échangeur thermique absorbeur solaire à fluide caloporteur et d'isolation thermique de celui-ci vis-à-vis de l'extérieur avec un matériau aérogel isolant thermique et translucide de sorte à laisser passer au moins 30% des rayons solaires incidents du spectre visible jusqu'à l'échangeur thermique absorbeur solaire. Le système d'ITE mis en place sur la façade peut être réalisé par tout matériau ou dispositif d'isolation thermique par l'extérieur, par exemple des panneaux d'isolation thermique par l'extérieur ou un enduit, par exemple un enduit minéral, d'isolation thermique par l'extérieur.

L'invention concerne aussi, d'une manière générale, un bâtiment comportant un système d'isolation thermique par l'extérieur, qui intègre une cavité contenant un échangeur thermique absorbeur solaire à fluide caloporteur et un matériau aérogel isolant thermique et translucide adapté pour isoler thermiquement de l'extérieur l'échangeur thermique absorbeur solaire et pour laisser passer au moins 30% des rayons solaires incidents du spectre visible jusqu'à l'échangeur thermique absorbeur solaire.

## Revendications

1. Procédé de pose d'un parement extérieur (10) sur une façade (2) d'un bâtiment, comportant une étape (E1) de pose d'un système d'isolation thermique par l'extérieur (3) sur la façade (2), **caractérisé en ce qu'**il comprend les étapes suivantes :
• réaliser (E11) une cavité (4) dans le système d'isolation thermique par l'extérieur (3), le système d'isolation thermique par l'extérieur (3) comprenant un enduit d'isolation thermique à aérogel granulaire,
• installer (E2) dans ladite cavité (4) un échangeur thermique absorbeur solaire à fluide caloporteur (5) et isoler thermiquement l'échangeur thermique absorbeur solaire de l'extérieur avec un matériau aérogel isolant thermique et translucide de sorte à laisser passer au moins 30% des rayons solaires incidents du spectre visible jusqu'à l'échangeur thermique absorbeur solaire.

2. Procédé selon la revendication précédente, **caractérisé en ce que** le système d'isolation thermique par l'extérieur (3) comprend également des panneaux, rigides ou souples, d'isolation thermique par l'extérieur.

3. Procédé selon la revendication 1 ou 2, **caractérisé en ce que** l'étape (E1) de pose d'un système d'isolation thermique par l'extérieur (3) sur la façade (2) est réalisée par projection de l'enduit d'isolation thermique par l'extérieur.

4. Procédé selon l'une des revendications précédentes, **caractérisé en ce que** ledit matériau aérogel isolant thermique introduit dans la cavité (4) est un aérogel granulaire ou monolithique, notamment un aérogel de silice.

5. Procédé selon l'une des revendications précédentes, **caractérisé en ce qu'**on pose sur la façade, par projection, une première couche (C1) d'enduit d'isolation thermique ayant une première épaisseur (e₁) puis une deuxième couche (C2) d'enduit d'isolation thermique ayant une deuxième épaisseur (e₂) en ménageant dans ladite deuxième couche (C2) une ouverture à l'aide d'une empreinte de forme complémentaire à celle de la cavité (4).

6. Procédé selon l'une des revendications précédentes, **caractérisé en ce que** l'enduit d'isolation thermique par l'extérieur contient une matrice, notamment un mortier, et des granules d'aérogel, notamment de l'aérogel de silice et/ou **en ce que** l'enduit à aérogel a une conductivité thermique inférieure à 0,03 W/m.K.

7. Procédé selon l'une des revendications précédentes, **caractérisé en ce qu'**il comprend une sous-étape (E21) de raccordement de l'échangeur thermique absorbeur solaire (5) à un circuit d'eau pour le chauffage du bâtiment et/ou de l'eau chaude sanitaire.

8. Procédé selon l'une des revendications précédentes, **caractérisé en ce qu'**il comprend les étapes de : introduire (E20) l'échangeur thermique absorbeur solaire dans la cavité (4), fermer (E30 ; E32) ladite cavité (4) à l'aide d'une plaque en matériau transparent dans le spectre du visible et remplir (E31) ladite cavité (4) avec le matériau isolant aérogel granulaire(40), ou **caractérisé en ce qu'**il comprend une étape d'insertion d'un module préfabriqué comportant l'échangeur thermique absorbeur solaire et une boîte fermée contenant le matériau aérogel isolant granulaire ou monolithique introduit dans la cavité.

9. Bâtiment comportant au moins une façade (2) ayant un parement extérieur (10) réalisé selon le procédé de l'une des revendications précédentes, le bâtiment comportant un système d'isolation thermique par l'extérieur (3), **caractérisé en ce que** le système d'isolation thermique par l'extérieur (3) comprend un enduit d'isolation thermique à aérogel granulaire et intègre une cavité (4) contenant un échangeur thermique absorbeur solaire à fluide caloporteur (5) et un matériau aérogel isolant thermique (40) et translucide adapté pour isoler thermiquement de l'extérieur l'échangeur thermique absorbeur solaire et pour laisser passer au moins 30% des rayons solaires incidents du spectre visible jusqu'à l'échangeur thermique absorbeur solaire.

10. Bâtiment selon la revendication précédente, **caractérisé en ce que** ledit matériau aérogel isolant thermique (40) est un aérogel granulaire ou monolithique, notamment un aérogel de silice.

11. Bâtiment selon l'une des revendications 9 et 10, **caractérisé en ce que** le système d'isolation thermique par l'extérieur (3) comprend également des panneaux, rigides ou souples, d'isolation thermique par l'extérieur.

12. Bâtiment selon l'une des revendications 9 à 11, **caractérisé en ce que** le fond de la cavité (4) est séparé de la façade par une épaisseur (e₁) d'élément isolant.

13. Bâtiment selon l'une des revendications 9 à 12, **caractérisé en ce que** l'enduit du système d'isolation thermique par l'extérieur (3) contient une matrice, notamment un mortier, et de l'aérogel granulaire, notamment de l'aérogel de silice et/ou **en ce que** l'enduit à aérogel granulaire a une conductivité thermique inférieure à 0,03 W/m.K.

14. Bâtiment selon l'une des revendications 9 à 13, **caractérisé en ce que** l'échangeur thermique absorbeur solaire (5) est raccordé à un circuit d'eau pour le chauffage du bâtiment et/ou de l'eau chaude sanitaire (8A, 8B, 9).

15. Bâtiment selon l'une des revendications 9 à 14, **caractérisé en ce que** la cavité (4) est remplie avec le matériau aérogel isolant sous forme granulaire et fermée par une plaque en matériau transparent dans le spectre du visible ou **en ce que** la cavité (4) contient un module préfabriqué comportant l'échangeur thermique absorbeur solaire et une boîte fermée contenant le matériau aérogel isolant granulaire ou monolithique introduit dans la cavité.

## Patentansprüche

1. Verfahren zur Anbringung einer Außenverkleidung (10) auf einer Fassade (2) eines Gebäudes, umfassend einen Schritt (E1) des Anbringens eines Wärmeisolierungssystems von der Außenseite (3) auf der Fassade (2),
**dadurch gekennzeichnet, dass** dieses die folgenden Schritte umfasst:
• Bilden (E11) eines Hohlraums (4) in dem Wärmeisolierungssystem von der Außenseite (3), wobei das Wärmeisolierungssystem von der Außenseite (3) eine Wärmeisolierungsbeschichtung aus einem granulären Aerogel umfasst,
• Installieren (E2), in dem Hohlraum (4), eines Solarabsorber-Wärmetauschers mit einem Kühlfluid (5), und Wärmeisolieren des Solarabsorber-Wärmetauschers gegen die Außenseite mit einem wärmeisolierenden und lichtdurchlässigen Aerogel-Material, um mindestens 30 % der einfallenden Sonnenstrahlen des sichtbaren Spektrums bis zu dem Solarabsorber-Wärmetauscher hindurchzulassen.

2. Verfahren nach dem vorhergehenden Anspruch,
**dadurch gekennzeichnet, dass** das Wärmeisolierungssystem von der Außenseite (3) ebenso starre oder nachgiebige Wärmeisolierungspaneele von der Außenseite umfasst.

3. Verfahren nach Anspruch 1 oder 2,
**dadurch gekennzeichnet, dass** der Schritt (E1) des Anbringens eines Wärmeisolierungssystems von der Außenseite (3) auf der Fassade (2) durch Aufspritzen der Wärmeisolierungsbeschichtung von der Außenseite durchgeführt wird.

4. Verfahren nach einem der vorhergehenden Ansprüche,
**dadurch gekennzeichnet, dass** das wärmeisolierende Aerogel-Material, das in den Hohlraum (4) eingebracht wird, ein granuläres oder monolithisches Aerogel, insbesondere ein Silica-Aerogel ist.

5. Verfahren nach einem der vorhergehenden Ansprüche,
**dadurch gekennzeichnet, dass** auf der Fassade, durch Aufspritzen, eine erste Schicht (C1) der Wärmeisolierungsbeschichtung mit einer ersten Dicke (e₁) angebracht wird, dann eine zweite Schicht (C2) der Wärmeisolierungsbeschichtung mit einer zweiten Dicke (e₂), indem in der zweiten Schicht (C2) eine Öffnung mit Hilfe eines Eindrucks mit einer Form gebildet wird, die komplementär zu jener des Hohlraums (4) ist.

6. Verfahren nach einem der vorhergehenden Ansprüche,
**dadurch gekennzeichnet, dass** die Wärmeisolierungsbeschichtung von der Außenseite eine Matrix enthält, insbesondere einen Mörtel, und Granula aus Aerogel, insbesondere aus Silica-Aerogel, und/oder dadurch, dass die Aerogel-Beschichtung eine Wärmeleitfähigkeit von weniger als 0,03 W/m.K aufweist.

7. Verfahren nach einem der vorhergehenden Ansprüche,
**dadurch gekennzeichnet, dass** dieses einen Teilschritt (E21) des Verbindens des Solarabsorber-Wärmetauschers (5) mit einem Kreislauf für Wasser zum Heizen des Gebäudes und/oder für Warmwasser umfasst.

8. Verfahren nach einem der vorhergehenden Ansprüche,
**dadurch gekennzeichnet, dass** dieses die Schritte umfasst: Einführen (E20) des Solarabsorber-Wärmetauschers in den Hohlraum (4), Verschließen (E30; E32) des Hohlraums (4) mit Hilfe einer Platte aus im sichtbaren Spektrum transparentem Material, und Füllen (E31) des Hohlraums (4) mit dem granulären isolierenden Aerogel-Material (40), oder **dadurch gekennzeichnet, dass** dieses einen Schritt des Einsetzens eines vorgefertigten Moduls umfasst, umfassend den Solarabsorber-Wärmetauscher und einen geschlossenen Kasten, der das granuläre oder monolithische isolierende Aerogel-Material enthält, das in den Hohlraum eingeführt wird.

9. Gebäude, umfassend mindestens eine Fassade (2) mit einer Außenverkleidung (10), die gemäß dem Verfahren nach einem der vorhergehenden Ansprüche hergestellt wird, wobei das Gebäude ein Wärmeisolierungssystem von der Außenseite (3) umfasst,
**dadurch gekennzeichnet, dass** das Wärmeisolierungssystem von der Außenseite (3) eine Wärmeisolierungsbeschichtung aus granulärem Aerogel umfasst und einen Hohlraum (4) aufweist, der einen Solarabsorber-Wärmetauscher mit einem Kühlfluid (5) und ein wärmeisolierendes und lichtdurchlässiges Aerogel-Material (40) enthält, das geeignet ist, den Solarabsorber-Wärmetauscher gegen die Außenseite wärmezuisolieren, und mindestens 30 % der einfallenden Sonnenstrahlen des sichtbaren Spektrums bis zu dem Solarabsorber-Wärmetauscher hindurchzulassen.

10. Gebäude nach dem vorhergehenden Anspruch,
**dadurch gekennzeichnet, dass** das wärmeisolierende Aerogel-Material (40) ein granuläres oder monolithisches Aerogel ist, insbesondere ein Silica-Aerogel.

11. Gebäude nach einem der Ansprüche 9 und 10,
**dadurch gekennzeichnet, dass** Wärmeisolierungssystem von der Außenseite (3) ebenso starre oder nachgiebige Wärmeisolierungspaneele von der Außenseite umfasst.

12. Gebäude nach einem der Ansprüche 9 bis 11,
**dadurch gekennzeichnet, dass** der Boden des Hohlraums (4) von der Fassade durch eine Dicke (e₁) des isolierenden Elements getrennt ist.

13. Gebäude nach einem der Ansprüche 9 bis 12,
**dadurch gekennzeichnet, dass** die Beschichtung des Wärmeisolierungssystems von der Außenseite (3) eine Matrix enthält, insbesondere einen Mörtel, und granuläres Aerogel, insbesondere Silica-Aerogel, und/oder dadurch, dass die granuläre Aerogel-Beschichtung eine Wärmeleitfähigkeit von weniger als 0,03 W/m.K aufweist.

14. Gebäude nach einem der Ansprüche 9 bis 13,
**dadurch gekennzeichnet, dass** der Solarabsorber-Wärmetauscher (5) mit einem Kreislauf für Wasser zum Heizen des Gebäudes und/oder für Warmwasser (8A, 8B, 9) verbunden ist.

15. Gebäude nach einem der Ansprüche 9 bis 14,
**dadurch gekennzeichnet, dass** der Hohlraum (4) mit dem isolierenden Aerogel-Material in granulärer Form gefüllt ist und durch eine Platte aus im sichtbaren Spektrum transparentem Material verschlossen ist, oder dadurch, dass der Hohlraum (4) ein vorgefertigtes Modul umfasst, umfassend den Solarabsorber-Wärmetauscher und einen geschlossenen Kasten, der das granuläre oder monolithische isolierende Aerogel-Material enthält, das in den Hohlraum eingeführt wird.

## Claims

1. Method for applying an exterior cladding (10) to a façade (2) of a building, including a step (E1) of applying an exterior thermal insulation system (3) to the façade (2), **characterized in that** it comprises the following steps:
• making (E11) a cavity (4) in the exterior thermal insulation system (3), the exterior thermal insulation system (3) comprising a granular aerogel thermal insulation render,
• installing (E2) in said cavity (4) a heat transfer fluid solar absorber heat exchanger (5) and thermally insulating the solar absorber heat exchanger from the exterior with a thermally insulating, translucent aerogel material so as to let at least 30% of the incident solar radiation in the visible spectrum through to the solar absorber heat exchanger.

2. Method according to the previous claim, **characterized in that** the exterior thermal insulation system (3) also comprises rigid or flexible exterior thermal insulation panels.

3. Method according to claim 1 or 2, **characterized in that** the step (E1) of applying an exterior thermal insulation system (3) to the façade (2) is performed by spraying the exterior thermal insulation render.

4. Method according to one of the previous claims, **characterized in that** said thermally insulating aerogel material introduced into the cavity (4) is a granular or monolithic aerogel, particularly a silica aerogel.

5. Method according to one of the previous claims, **characterized in that** a first layer (C1) of thermal insulation render having a first thickness (e₁), then a second layer (C2) of thermal insulation render having a second thickness (e₂) are applied to the façade by spraying, an opening being made in said second layer (C2) using an insert with a complementary shape to the shape of the cavity (4) .

6. Method according to one of the previous claims, **characterized in that** the exterior thermal insulation render contains a matrix, particularly a mortar, and aerogel granules, particularly silica aerogel, and/or **in that** the aerogel render has a thermal conductivity of less than 0.03 W/m.K.

7. Method according to one of the previous claims, **characterized in that** it comprises a sub-step (E21) of connecting the solar absorber heat exchanger (5) to a water system for heating the building and/or domestic hot water.

8. Method according to one of the previous claims, **characterized in that** it comprises the steps of: introducing (E20) the solar absorber heat exchanger into the cavity (4), closing (E30; E32) said cavity (4) using a sheet of material transparent in the visible spectrum and filling (E31) said cavity (4) with the granular aerogel insulating material (40), or **characterized in that** it comprises a step of inserting a prefabricated module including the solar absorber heat exchanger and a closed box containing the granular or monolithic insulating aerogel material introduced into the cavity.

9. Building including at least one façade (2) having an exterior cladding (10) produced according to the method of one of the previous claims, the building including an exterior thermal insulation system (3), **characterized in that** the exterior thermal insulation system (3) comprises a granular aerogel thermal insulation render and incorporates a cavity (4) containing a heat transfer fluid solar absorber heat exchanger (5) and a translucent, thermally insulating aerogel material (40) suitable for thermally insulating the solar absorber heat exchanger from the exterior and for letting at least 30% of the incident solar radiation in the visible spectrum through to the solar absorber heat exchanger.

10. Building according to the previous claim, **characterized in that** said thermally insulating aerogel material (40) is a granular or monolithic aerogel, particularly a silica aerogel.

11. Building according to one of claims 9 or 10, **characterized in that** the exterior thermal insulation system (3) also comprises rigid or flexible exterior thermal insulation panels.

12. Building according to one of claims 9 to 11, **characterized in that** the bottom of the cavity (4) is separated from the façade by a thickness (e₁) of insulating element.

13. Building according to one of claims 9 to 12, **characterized in that** the render of the exterior thermal insulation system (3) contains a matrix, particularly a mortar, and granular aerogel, particularly silica aerogel, and/or **in that** the granular aerogel render has a thermal conductivity of less than 0.03 W/m.K.

14. Building according to one of claims 9 to 13, **characterized in that** the solar absorber heat exchanger (5) is connected to a water system for heating the building and/or domestic hot water (8A, 8B, 9).

15. Building according to one of claims 9 to 14, **characterized in that** the cavity (4) is filled with the insulating aerogel material in granular form and closed by a sheet of material transparent in the visible spectrum or **in that** the cavity (4) contains a prefabricated module including the solar absorber heat exchanger and a closed box containing the granular or monolithic insulating aerogel material introduced into the cavity.
